# EUROPEAN PATENT SPECIFICATION

(11) **EP 1 137 966 B1**
(45) Date of publication and mention of the grant of the patent: **15.06.2005**
(21) Application number: 99956797.7
(22) Date of filing: 29.10.1999
(51) Int. Cl.: G03B 42/02

(54) **APPARATUS AND METHOD FOR POSITIONING A DIGITAL X-RAY DETECTOR ARRAY**
VERFAHREN UND VORRICHTUNG ZUR POSITIONIERUNG EINER DIGITALEN RÖNTGENSTRAHLENDETEKTIONSANORDNUNG
APPAREIL ET PROCEDE DE POSITIONNEMENT D'UNE MOSAIQUE DE DETECTEURS DE RAYONS X NUMERIQUES

(30) Priority: 19.11.1998 US 109043 P
(43) Date of publication of application: 04.10.2001
(73) Proprietor: Direct Radiography Corp., Newark, DE 19714-6101 (US)
(72) Inventor: CROWELL, John, Arnold, Wilmington, DE 19807 (US)
(74) Representative: Every, David Aidan
(86) International application number: PCT/US1999/025534
(87) International publication number: WO 2000/031586

(56) References cited:
- US-A- 4 300 053
- US-A- 5 572 567

## Description

### Field of the Invention

This invention relates to a system for taking digital X-rays images. More particularly, this invention relates an apparatus that automatically positions and orients a digital detector array to permit either landscape or portrait image format.

### Background of the Invention

For over 60 years, X-ray film, in combination with intensifying screens, has been the standard for capturing and displaying medical X-ray images because of said film's functional utility and perceived high image quality. X-ray film has been vital to this process in that, X-ray film has performed the functions of capture, display, storage, and communication of the image data.

Over the years, there have been advances in X-ray techniques which have moved X-ray technology away from traditional X-ray film and toward digital X-ray capture devices. Some of these advances include computed tomography, and ultrasound and nuclear medicine, which gained widespread acceptance in the 1970's. In the 1980's, magnetic-resonance imaging and digital subtraction angiography furthered the trend toward digital imaging. Even with these advances, an estimated 70% of all diagnostic examinations are still performed using conventional radiography with traditional screen-film systems.

Until recently, all efforts to integrate conventional radiography into the digital environment have required both intermediate conversion steps and additional work by the technicians. Current developments have made it technically possible and economically viable to use electronic equipment to supplant film for three offilm's four functions--image display, storage and communication. With these advances, high luminance display monitors, combined with high performance personal computers and workstations, are now available to assist in this image capture and integration process. Electronic image archives can more effectively store and retrieve the massive amounts of image data generated by an X-ray imaging facility. High speed electronic networks can transmit image files wherever and whenever needed. One important factor in the development of digital X-ray imaging systems has been an effective method for capturing high resolution X-ray image data in a digital format. The solution has been the digital image capture array.

Digital image capture arrays use radiation sensors to convert incident radiation directly to an electrical charge. Typically such sensors comprise a complex structure which includes a bottom and a middle conductive electrode separated by a dielectric to form a capacitor, a photo conductive layer over one of the electrodes and a top electrode over the photo conductive layer to apply a charging voltage to the sensor. The structure thus forms two capacitors connected in series. A voltage is applied between the bottom and top electrodes charging the two capacitors. Upon exposure to radiation, the photo conductor becomes. conductive altering the charge distribution in the two capacitors. With proper selection of electronics and materials, this results in a charge accumulated and stored in the capacitor formed by the bottom and middle electrodes which is proportional to the exposure to the incident radiation.

In this device, a plurality of sensors may be assembled in an array of rows and columns to form a radiation detection panel. By sequentially reading out charges accumulated in the individual sensors, an image of the relative exposure of different areas of the panel is obtained. This image represents the radiation intensity incident on the panel after it has passed through a subject illuminated by the radiation. Use of X-rays in this manner to produce an image of a patient results in an image called a radiogram in which a plurality of charges represents the image.

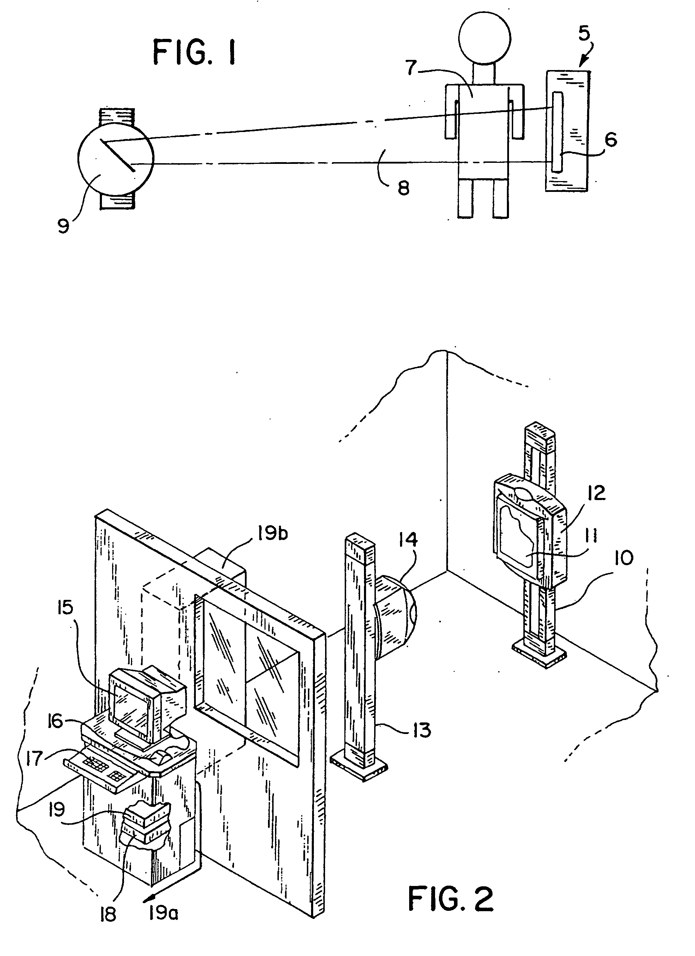

Fig. 1 shows the basic concept of the conventional direct X-ray process that results from this technology. An electronic cassette **5** containing an image capture element **6** is placed in a first position much like a standard screen-film cassette is used to receive a first image. A target **7,** i.e., a patient in the case of medical diagnostic imaging, is positioned in an X-ray beam path **8** emitted by a source of X-radiation **9.** The radiation emerging through the target **7** is imagewise modulated in intensity based on the varying degree of X-ray absorption in the target **7**. The pattern of this imagewise modulated radiation is captured and stored by image capture element **6** contained in the electronic cassette **5.**,

The core component of this technology is the image capture element. As previously mentioned, the electronic cassette **5** typically houses the X-ray image capture element **6.** Element **6** can comprise a plurality of discrete array modules juxtaposed in an assembly over the top surface of a base plate, such that each module is disposed adjacent at least one other module to form a two-dimensional mosaic of modules. Each of the discrete modules includes a plurality of thin-form transistors arrayed adjacent the top surface of a dielectric substrate. A continuous radiation detecting layer is disposed over the plurality of juxtaposed modules, and produces a latent radiographic image in the form of electrical charges. When X-ray sensors, in the electronic cassette, sense the presence of X-radiation followed by absence of X-radiation, a process of digitizing the plurality of electrical. charges begins within the X-ray image capture element. This plurality of charges is converted within readout electronics to produce a plurality of digitized image element values, and these values are transferred to an electronic memory storage means located in the electronic cassette. When it is desired to read out the data recorded in memory means, the digitized image element values are directed to a central control unit.

One specific electronic cassette uses an amorphous selenium-coated thin-film-transistor (TFT) array to capture and convert X-ray energy directly into digital signals. This direct X-ray technology provides a full field 35·56 cm (14 inch) by 43·18 cm (17 inch) imaging area using a 2560 x 3072 matrix of detector elements. Under a bias voltage applied across the detector structure, incident X-rays directly generate electron-hole pairs in the selenium layer. These charges are collected by individual storage capacitors associated with each detector element within the detector array for readout by customized electronics. The result is a digital image that can be immediately reviewed on a video monitor and once accepted, can be forwarded via a network for soft and hard copy display, data storage and transmission to other locations. The technology is well described in a number of publications and issued patents, which include U. S. Patent No. 5,319,206 issued on June 7, 1994 to Lee et al., U.S. Patent No. 5,381,014 issued on January 10, 1995 to Jeromin et al., and U. S. Patent No. 5,652,430 issued July 29, 1997 to Lee.

This new direct digital X-ray system clearly advances X-ray technology to another level. An observation of the steps required to implement the direct X-ray technology and the steps required to implement the traditional screen-film technology illustrates the advantages of direct X-ray. technology. Screen-film systems rely on the indirect process of X-ray-to-light-to film to create an image. This requires several steps which include:
1) X-ray photons exit the target and pass through the phosphor materials in the intensifying screens which absorb incident X-ray energy and fluoresce.
2) The emitted light exposes the film emulsion creating a latent image. Some light energy scatters and sensitizes the emulsion in areas not directly in the path of the original incident X-ray. This can degrade image sharpness.
3) The latent image is made visible by processing the film with developer and fixer chemistries.
In contrast, the direct digital X-ray process involves only one step:
1) X-ray photons exit the anatomy and are captured directly as digital signals by the detector array. In seconds, the digital signals appear as an image on a monitor for diagnosis. This digital image can be easily output to film.
The use of direct digital image capture obviates the need for phosphors, scintillators or intermediate steps, and results in little or no light diffuse or scatter within the detector. Thus, direct X-ray technology provides a faster and better quality X-ray. With direct digital radiography, patients are able to use the most convenient location in a network for their examination and are assured that the procedure will be accurately and quickly completed. In addition, patient images can be forwarded wherever they are needed. In direct-to-digital image capture systems, the image data sent to workstations, printers and archives is always substantially identical to the original. The all-digital radiology department will help hospitals, imaging centers, private practices, and clinics realize the full benefits of a picture archiving, windowing and communication system. Changing health care needs require diagnostic imaging service providers to rapidly produce the highest quality images, transmit them broadly, display them in alternative ways, and then archive and retrieve them efficiently. To accomplish this, direct-to-digital X-ray image capture becomes the critical link in the chain.

Although recent technology developments have made it possible to create digital images, there is still a need for automation of certain steps in the digital imaging process. For example, there is still a need to automatically position and orient the digital array cassette for either landscape or portrait images. Traditionally, radiographs are either taken in landscape format, i.e., the major axis of the image is horizontal, or in portrait format, i.e., the major axis of the image is vertical, the particular format selected being dependent on the nature of the target being X-rayed. In the past, switching between the two image formats has required a technician to physically remove the cassette from the cassette holder and reorient the cassette in the desired position. The same is also true of alignment of the X-ray emission apparatus with the cassette. Clearly, both are time consuming and prolong the entire X-ray procedure, including the X-ray exposure time for both patient and technician. Therefore, it is desirable to have an apparatus that can automatically position image capture equipment, in particular the detector array as well as the X-ray emission apparatus, to permit a particular X-ray image format.

U.S. Patent No. 4,300,053 to Guynes discloses a rotatable cassette holder which facilitates manual control of reorientation of the cassette. The cassette holder is mounted to a pair of vertical rails to allow the cassette holder to be manually moved vertically along the rail. A hub is mounted on a rear side of the cassette holder, and the hub fits snugly over an axle, thereby providing a rotatable mounting for the cassette holder. The hub is secured to the axle by a bolt 28 and a nut 30 (and in addition a stop pin is included in the securing mechanism). In order to position the cassette holder in a different orientation, the operator must manually rotate the cassette holder.

US-A-5572567 describes a universal radiographic room that facilitates the use of radiographic processes and linear tomographic examination. The universal radiographic room includes a tube mounting means for supporting an x-ray tube, longitudinal, lateral, vertical and angulation mechanisms and associated position sensors.

### Summary of the Invention

It is an object of this invention to provide an apparatus that can automatically position an X-ray capture cassette for either landscape or portrait images.

It is another object of this invention to ensure the ability to reference an image array regardless of the orientation of that image array.

It is another object of this invention to automatically synchronize movement of an X-ray emission apparatus with an X-ray detector apparatus.

The present invention provides an apparatus for positioning and orienting a digital detector array used in the process of taking an X-ray, as defined in claim 1.

The present invention further provides also a method for positioning an X-ray cassette used in the process of taking an X-ray, as defined in claim 18.

The present invention provides an apparatus for positioning and orienting a digital X-ray detector array for the purpose of taking a digital X-ray images. The apparatus provides both rotational and translational movement between a first and second position. This flexibility in movement permits a generally rectangular shaped X-ray imaging array to rotate form a first position, such as a portrait position, to a second position, such as a landscape position.

The present apparatus has a carriage plate and an array plate. These plates provide the translational and rotational movement of the invention, respectively. The carriage plate connects, via a guide rail, to a fixed base and moves vertically along the base. This ability to move vertically facilitates the translational movement of the invention. The array plate attaches to a bearing mounted between the array plate and the carriage plate. A follower cam on the array plate engages a cam track that is fixed to the base. As the array plate is rotated relative to the carriage plate, the cam follower moves along the cam track and the carriage plate is urged along the guide rails. This translational and rotation movement permits orientation of the X-ray detector array. A drive means connected to the carriage plate and the bearing via a pulley actuates rotational movement in the array plate, and thus, the subsequent translational movement in the carriage plate.

### Description of the Drawings

FIG. 1 is an elevation view of the basic concept of the direct X-ray process.
FIG. 2 is a diagram of the typical room layout of a digital imaging system for a chest X-ray;
FIG. 3 is a front cross-sectional view of the image positioning system of the present invention;
FIG. 4a, 4b and 4c depict a sequence of rotational and translational movements by the invention;
FIG. 5 is a side cross-sectional view of the image positioning system of the present invention;
FIG 6. is a top cross-section view of a drive means of the present invention;
FIG 7 illustrates the location of the translational-rotational carriage when used in an X-ray table; and
FIG 8 is view of the X-ray table and the housing containing the detector array.

### Detailed Description of the Preferred Embodiment

The present invention is illustrated in the context of a system that performs a chest imaging application. A brief explanation of the chest imaging system will precede the description of the present invention. This system, shown in Fig. 2, incorporates both hardware and software components in acquiring a digital image. A stand **10** houses the direct X-ray detector array **11** within a counterbalance receptor holder **12.** The stand **10** provides adjustable, easily accessible array positioning controls and a rotation-translations carriage system for the X-ray detector array **11.** One novel feature of the invention is that the rotation-translational system enables technicians to position the X-ray detector array **11** to accommodate a full range of X-ray images. Another novel feature of the invention is that the position and orientation of the detector array is automatically synchronized with the position of the X-ray tube housing **14.** The X-ray tube stand **13** comprises an X-ray tube housing **14,** an automatic collimator (not shown) within the X-ray tube housing and servo linkages (not shown) to the receptor holder.

The operator console (also known as the "Direct X-ray Operator Console) is the user interface component of the system. Most operator functions are accomplished at the operator console. The operator console also provides the control functions responsible for synchronizing the ready states of the detector array and the X-ray equipment. The. operator console can include a computer with an image view monitor **15,** peripheral pointing device **16,** keyboard **17,** a direct X-ray array controller **18,** system CPU **19,** network connections **19a** and electronics cabinet **19b.**

Radiologic technicians use the operator console to input patient information, examine data, and acquire, preview, and transmit images and associated text information from the direct X-ray system to hardware and software display devices. Users can customize certain features of the operator console to meet their specific needs. For example, operators can define frequently used image rejection comments or informational comments. Then, the operators can attach one or more of these predefined comments to an image file by simply selecting them from a dialog box. The system may include other peripheral devices such as printers and DICOM storage, workstations and archive devices, additional user interfaces and an anatomical pre-programmed exposure.

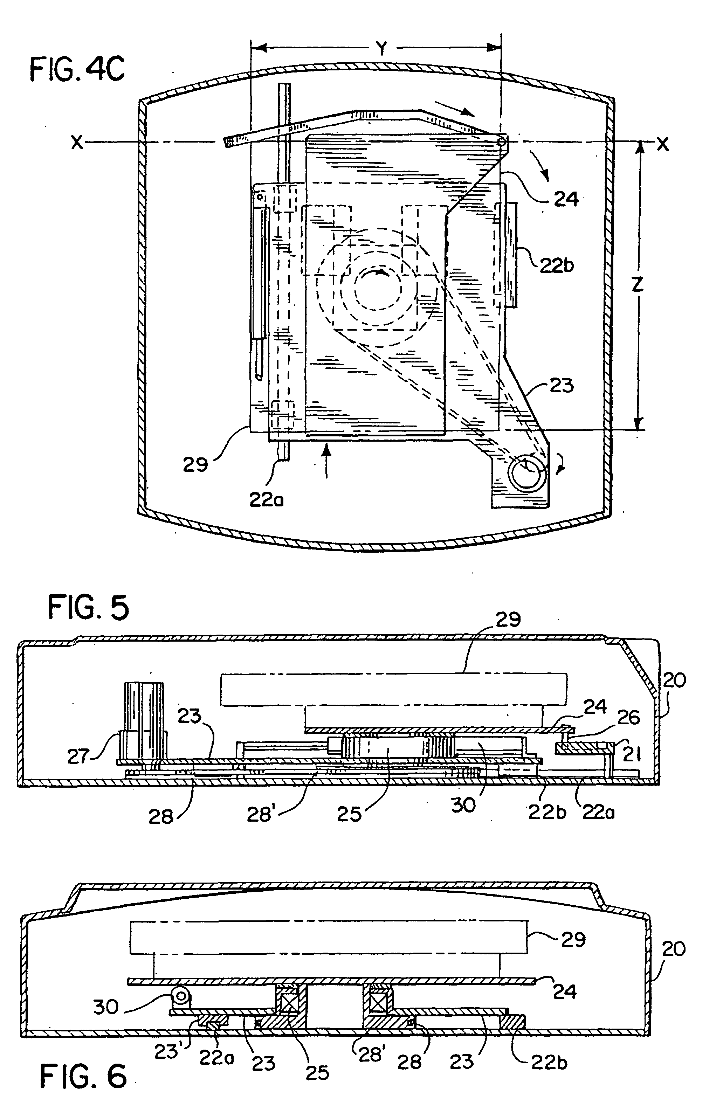

Referring to Figs. 2, 3 and 6, the present invention focuses on the carriage holding the direct detector array **11** housed in the receptor holder **12** that is attached to the stand **10.** Specifically, the receptor holder **12** houses a fixed base **20.** Attached to the fixed base **20** is a cam track **21.** Also attached to the base are guide rails **22a** and **22b**. Slidingly mounted on guide rails **22** is carriage plate **23.** Pillow blocks or bearings **23'** (Fig. 6) are attached to the bottom of one side of the carriage plate **23** to secure carriage plate **23** to guide rail **22a** and to counter any torque placed on carriage plate **23** by the rotational movement of array plate **24.** The other side of carriage plate **23** need not have pillow blocks, but may simply rest and slide directly on guide rail **22b.** The sliding of carriage plate **23** along guide rails **22** permits the translational movement necessary to properly orient the X-ray imaging array **29**.

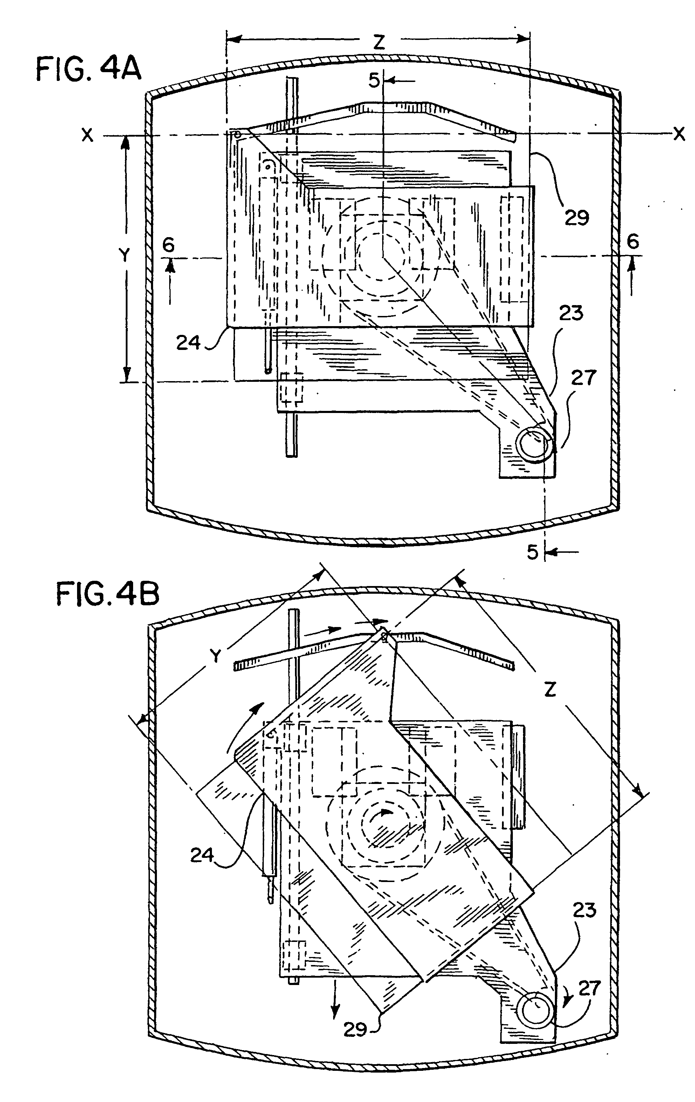

Rotatingly mounted on carriage plate **23** is a bearing **25** which is also attached to the array plate **24** such that array plate **24** is rotatable relative to carriage plate **23.** Array plate **24** is provided with a tang **24'** that extends over cam track **21** to permit a cam follower **26** mounted on tang **24'** to move along cam track **21** as array plate **24** is rotated between first and second positions. In a first position, shown in Fig. 4a, array plate **24** is orientated so that cam follower **26** is substantially at the left-most potion of track **21.** In the second position, shown in Fig. 4c, array plate **24** is rotated. clockwise 90 degrees until cam follower **26** is substantially at the right-most portion of track **21**.

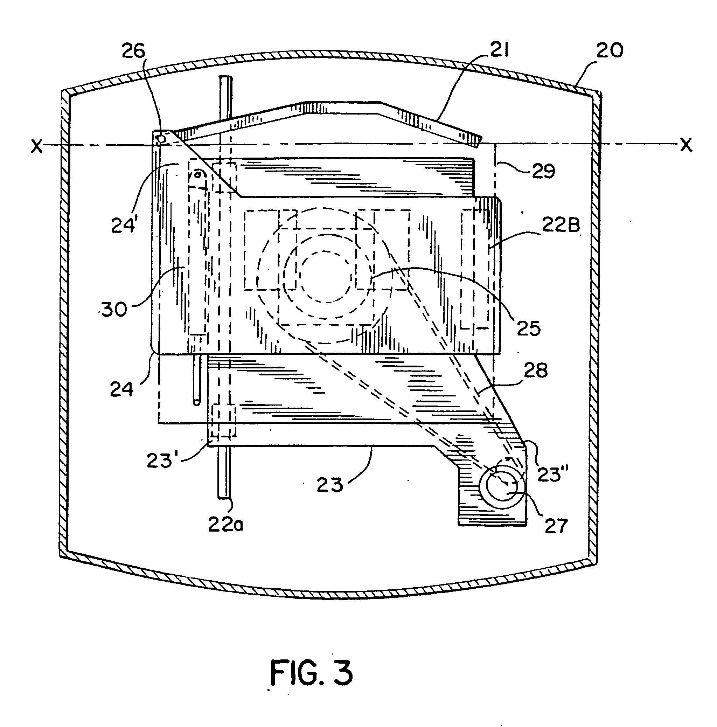

A bi-directional motor **27** is mounted on tang **23"** which forms a part of carriage plate **23**. Motor **27** drives a belt **28** that is attached to the rotatable portion of bearing **25.** As motor **27** is actuated, belt **28** causes bearing **25**, and hence array plate **24**, to rotate either clockwise or counter clockwise 90 degrees between its two positions. For example, beginning in the first position as shown in Fig. 4a of the drawings, clockwise rotation of motor **27** causes clockwise rotation of array plate **24.** As array plate **24** rotates, cam follower **26** moves along track **21** to the right. In doing so, carriage plate **23,** being attached to array plate **24** by way of bearing **25,** is forced along guide rails **22** away from cam track **21.** When an array plate **29** is mounted on the carriage plate, vertical movement of carriage plate **23** moves the array plate **29** in the vertical direction while the array plate **29** rotates. Also shown in Fig. 3 is a tension cable **30**.

More specifically, when an X-ray imaging array **29** is attached to array plate **24,** the X-ray imaging array can be moved between a first position and a second position by rotating the array plate. In the first position, shown in Figs.3 and 4a, the long edge Z of array **24** is aligned along axis x-x. In the second position, shown in Figs. 4c, the short edge Y of array **29** is aligned along axis x-x. One of the purposes of the invention is to ensure that either the long edge Z or the short edge Y of array **29** is always aligned along horizontal axis x-x when array **29** is in an imaging position, thus permitting axis x-x to be used as a common reference for all images. In addition, this permits proper alignment of the center of the X-ray beam emitted from X-ray tube housing **14** and the detectors utilized in the system's automatic exposure control (not shown) incorporated into array **29**. The vertical movement of the detector array is accomplished through the carriage plate as previously explained.

Figures 4a, 4b and 4c show the sequence of movement required to reposition and reorient the digital array **29** between the first and second positions. In Fig. 4a, the carriage plate **23**, which is disposed for translational movement, is proximal to cam track 21. The array plate **24**, which is disposed for rotational movement, is oriented so that array **29** is in the horizontal or landscape position. In Fig. 4b, the system is illustrated in a transitional position between the first and second positions. Specifically, as the motor **27** rotates in a clockwise direction, the pulley system causes the bearing **25** to rotate in the same clockwise direction. This movement results in the array plate rotating in a the clockwise direction. During rotation, the cam follower **26** moves along the cam track **21** to guide the array plate translation.

The rotation of the bearing **25** also causes the carriage plate **24** to move vertically away from cam track **21** along the guide rails **22.** Fig. 4c shows the second position of carriage plate **24** and array **29.** As shown, the array **29** is in vertical or portrait position in which short edge Y is aligned with the x-x axis. The cam follower **26** has moved to the rightmost end of the cam track **21.** The end of cam track **21** inhibits any further movement of cam follower **26** and thus also functions to restrict any further translational movement of carriage plate **23.** The carriage plate **23** is now in a distal position relative to cam track **21**. This new position of the two plates could be desirable when taking an X-ray of a patient.

Fig. 5 shows a side cross-sectional view of the invention. As shown, the X-ray imaging array **29**, the array plate **24**, the motor **27**, and the bearing **25** are all directly or indirectly supported by the carriage plate **23**. Each of these elements is disposed for translational movement along guide rails **22** by way of carriage plate **23.** Fig. 5 also shows the physical relationship of the array plate **24,** the cam track **21,** and the cam follower **26.**

Fig. 6 shows a top cross-section view of the invention. Most readily shown in this figure are bearing **25** and guide rails **22** in relation to the carriage plate **23**.

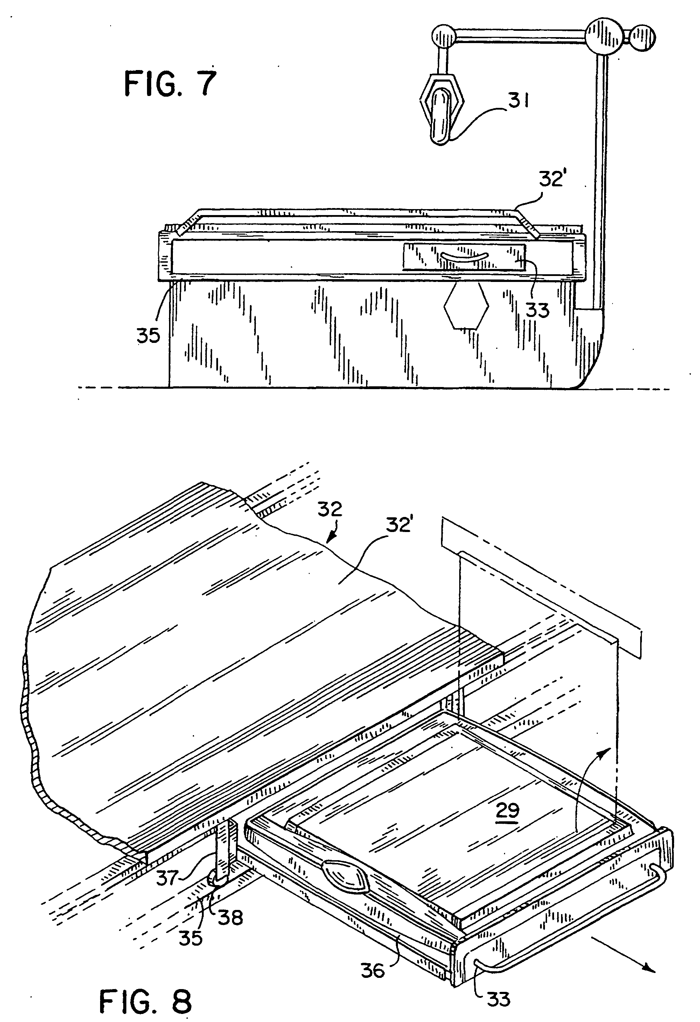

Figs. 7 and 8 show an alternate embodiment of the present invention in which the system is disposed in a drawer **33** mounted under an X-ray table **32**. In this embodiment, table **32** has an X-ray source **31** positioned above table surface **32**'. The detector array **29** is positioned in a drawer **33** which is slidably attached below the table surface **32'.**

As shown in Fig. 8, drawer **33** is slidably attached to table **32** to permit access to array **29** and the invention. However, access to array **29** is not typically necessary since the invention obviates the need to manually open drawer **33** to switch array **29** between portrait and landscape positions. In a preferred embodiment, the invention can simply be inserted into X-ray film cassette drawers of conventional X-ray tables without the need for modification of the drawers or tables. Thus, X-ray tables that have in the past required manual array reconfiguration can be easily and quickly converted to automatic reconfiguration utilizing the current invention.

Although, the invention has been illustrate and describe utilizing a single motor to drive the system, those skilled in the art will understand that other drive systems can be employed. In one embodiment, a direct drive motor can be used to cause rotation of bearing 25 rather than the pulley driven system described herein. In another embodiment, rather than driving the system by rotation in a fashion that ultimately results in translation, the system can be driven by translation that secondarily results in rotation. Thus, a drive system could be used to propel carriage **23** along guide rails **22**, forcing cam follower **26** to move along cam track **21.** Furthermore, those skilled in the art will understand that although this system is most desirable for digital x-ray capture arrays, it can also be utilized in conventional X-ray systems that utilize film to record images.

The apparatus of this invention provides significant advantages over the current art. The invention has been described in connection with its preferred embodiments. However, it is not limited thereto. Changes, variations and modifications to the basic design may be made without departing from the scope this invention. In addition, these changes, variations and modifications would be obvious to those skilled in the art having the benefit of the foregoing teachings. All such changes, variations and modifications are intended to be within the scope of this invention, which is limited only by the following claims.

## Claims

1. An apparatus for positioning and orienting a digital detector array (11) used in the process of taking an X-ray image, said apparatus comprising:
a) a first plate (23), said first plate (23) having top and bottom sides and said first plate (23) being able to move in a translational direction;
b) a second plate (24) overlaying said first plate (23), said second plate (24) having top and bottom sides, said second plate (24) being able to rotate in both clockwise and counter-clockwise directions and being adapted to hold the digital detector array;
c) a connecting means (25) for attaching said first plate (23) to said second plate (24), said connecting means (25) being rotatingly mounted onto said first and second plates (23, 24) such that said connecting means (25) is between said first and second plates (23, 24); **characterized by**
d) a drive means (27, 28) attached to said connecting means (25) for causing automatic rotation of said second plate (24) and simultaneous, automatic translation of said first plate (23), to cause rotational movement and translational movement, respectively, of the digital detector array (11) to a desired position.

2. The apparatus of claim 1 further comprising:
e) a support base (20), said base (20) being attached to the bottom side of said first plate (23);
f) a cam track (21) attached to said base (20) to guide rotation of said second plate (24); and
g) guide rails (22a, 22b) attached to said base (20) and said first plate (23) to facilitate translation of said first plate (23).

3. The apparatus of claim 2 further comprising bearings (23') to connect said first plate (23) to said guide rails (22a, 22b).

4. The apparatus of claim 3 wherein said first and second plates (23, 24) have tang portions (23", 24').

5. The apparatus of claim 4 wherein said bearings (23') attach said first plate (23) to said guide rails (22a, 22b) at said tang portion (23") of said first plate (23).

6. The apparatus of claim 2 further comprising a cam follower (26) to connect said second plate (24) to said cam track (21).

7. The apparatus of claim 6 wherein said cam follower (26) is connected to said second plate (24) at a tang portion (24') of said second plate (24).

8. The apparatus of claim 1 wherein said drive means (27, 28) comprises a motor (27) and a belt (28), said belt (28) being attached to said connecting means (25).

9. The apparatus of claim 8 wherein said connecting means (25) is a bearing (25).

10. The apparatus of claim 8 wherein said motor (27) is a bi-directional motor (27).

11. The apparatus of claim 8 wherein said drive means (27, 28) includes at least two motors, one motor to facilitate the rotational movements of said second plate (24) and one motor to facilitate the translation of said first plate (23).

12. The apparatus of claim 2 further comprising an X-ray imaging array (29) attached to said second plate (24), said X-ray imaging array (29) being able to capture an X-ray image.

13. The apparatus of claim 1 wherein said second plate (24), said connecting means (25), and said drive means (27, 28) are carried by said first plate (23) in the direction of the movement of said first plate (23) during the translational movement of said first plate (23).

14. The apparatus of claim 13 wherein said rotation of said second plate (24) occurs during the translation of said first plate (23).

15. The apparatus of claim 1 further comprising:
a table (32) having a surface (32') on which a patient is positioned;
a carriage for positioning and orienting a cassette (11) used in the process of taking an X-ray, said carriage comprising:
said first plate (23);
said second plate (24);
said connecting means (25); and
said drive means (27, 28);
a housing, to contain the carriage and the cassette (11), said housing slidably mounted to said table (32) below said table surface (32'); and
a means (33, 37, 38) to move said detector array housing along said table surface in a parallel direction to the position of said patient.

16. The apparatus of claim 15 further comprising:
e) a support base (20), said base (20) being attached to the bottom side of said first plate (23);
f) a cam track (21) attached to said base (20) to guide rotation of said second plate (24); and
g) guide rails (22a, 22b) attached to said base (20) and said first plate (23) to facilitate translation of said first plate (23).

17. The apparatus of claim 16 further comprising a cam follower (26) to connect said second plate (24) to said cam track (21).

18. A method for positioning an X-ray cassette (11) used in the process of taking an X-ray image, **characterised by** comprising the steps of:
a) automatically rotating an X-ray cassette (11) for taking an X-ray image, through an apparatus for positioning and orienting said X-ray cassette (11) including a drive means for causing the rotation of said X-ray cassette (11); and
b) simultaneously automatically translating the X-ray cassette (11) to a desired position, through said apparatus wherein said drive means causes the translation of said X-ray cassette (11).

19. The method of claim 18 further comprising the step of automatically synchronizing movement of the X-ray cassette (11) with an X-ray emission apparatus (9, 14).

20. The method of claim 19 wherein said step of synchronizing includes the step of translating the X-ray emission apparatus (9, 14) to maintain alignment with the X-ray cassette (11).

21. The method of claim 18 further comprising the steps of:
synchronizing translational movement of an X-ray emission apparatus (9, 14) and said X-ray cassette (11).

22. The method of claim 21 wherein said step of synchronizing further comprises the steps of vertically moving an X-ray emission apparatus (9, 14) and vertically moving an X-ray cassette (11) to positions where the X-ray emission apparatus (9, 14) and the X-ray cassette are aligned.

23. The method of claim 21 wherein said step of synchronizing further comprises the steps of horizontally moving an X-ray emission apparatus (9, 14) and horizontally moving an X-ray cassette (11) to positions where the X-ray emission apparatus (9, 14) and the X-ray cassette (11) are aligned.

## Patentansprüche

1. Vorrichtung zum Positionieren und Ausrichten einer digitalen Detektoranordnung (11), die beim Vorgang des Aufnehmens eines Röntgenbildes verwendet wird, wobei die Vorrichtung folgendes umfaßt:
a) eine erste Platte (23), wobei die erste Platte (23) Ober- und Unterseiten ausweist und die erste Platte (23) imstande ist, sich in einer Verschiebungsrichtung zu bewegen;
b) eine zweite Platte (24), die die erste Platte (23) überlagert, wobei die zweite Platte (24) Ober- und Unterseiten aufweist und die zweite Platte (24) imstande ist, sich sowohl in Uhrzeigerrichtung als auch gegen die Uhrzeigerrichtung zu drehen, und so ausgestaltet, daß die digitale Detektoranordnung aufrechterhalten bleibt;
c) eine Verbindungseinrichtung (25) zum Anfügen der ersten Platte (23) an die zweiten Platte (24), wobei die Verbindungseinrichtung (25) drehbar an der ersten und der zweiten Platte (23, 24) angebracht ist, so daß die Verbindungseinrichtung (25) zwischen der ersten und der zweiten Platte (23, 24) liegt; **gekennzeichnet durch**
d) eine Antriebseinrichtung (27, 28), die zum Bewirken der gleichzeitigen automatischen Drehung der zweiten Platte (24) und der gleichzeitigen automatischen Verschiebung der ersten Platte (23) an die Verbindungseinrichtung (25) angefügt ist, um eine Drehbewegung bzw. Verschiebungsbewegung der digitalen Detektoranordnung (11) zu einer erwünschten Position zu bewirken.

2. Vorrichtung nach Anspruch 1, ferner mit:
e) einer Trägerbasis (20), wobei die Trägerbasis (20) an die Unterseite der ersten Platte (23) angefügt ist;
f) einer Kurvenbahn (21), die an die Basis (20) angefügt ist, um die Drehung der zweiten Platte (24) zu fuhren; und
g) Führungsschienen (22a, 22b), die an die Basis (20) und die erste Platte (23) angefügt sind, um die Verschiebung der ersten Platte (23) zu ermöglichen.

3. Vorrichtung nach Anspruch 2, ferner mit Lagern (23'), um die erste Platte (23) mit den Führungsschienen (22a, 22b) zu verbinden.

4. Vorrichtung nach Anspruch 3, wobei die erste und die zweite Platte (23, 24) Zapfenabschnitte (23", 24') aufweisen.

5. Vorrichtung nach Anspruch 4, wobei die Lager (23') die erste Platte (23) an dem Zapfenabschnitt (23") der ersten Platte (23) mit den Führungsschienen (22a, 22b) verbinden.

6. Vorrichtung nach Anspruch 2, ferner mit einem Kurvenläufer (26), um die zweite Platte (24) mit der Kurvenbahn (21) zu verbinden.

7. Vorrichtung nach Anspruch 6, wobei der Kurvenläufer (26) mit der zweiten Platte (24) an einem Zapfenabschnitt (24') der zweiten Platte (24) verbunden ist.

8. Vorrichtung nach Anspruch 1, wobei die Antriebseinricbtung (27, 28) einen Motor (27) und einen Riemen (28) umfaßt, wobei der Riemen (28) an die Verbindungseinrichtung (25) angefügt ist.

9. Vorrichtung nach Anspruch 8, wobei die Verbindungseinrichtung (25) ein Lager (25) ist.

10. Vorrichtung nach Anspruch 8, wobei der Motor (27) ein Umkehrmotor (27) ist.

11. Vorrichtung nach Anspruch 8, wobei die Antriebseinrichtung (27, 28) mindestens zwei Motoren aufweist, und zwar einen Motor, um die Drehbewegung der zweiten Platte (24) zu ermöglichen, und einen Motor, um die Verschiebungsbewegung der ersten Platte (23) zu ermöglichen.

12. Vorrichtung nach Anspruch 2, ferner mit einer Röntgen-Abbildungsanordnung (29), die an die zweite Platte (24) angefügt ist, wobei die Röntgen-Abbildungsanordnung (29) imstande ist, ein Röntgenbild aufzunehmen.

13. Vorrichtung nach Anspruch 1, wobei die zweite Platte (24), die Verbindungseinrichtung (25) und die Antriebseinrichtung (27, 28) von der erste Platte (23) während der Verschiebungsbewegung der ersten Platte (23) in die Richtung der Bewegung der ersten Platte (23) befördert werden.

14. Vorrichtung nach Anspruch 13, wobei die Drehung der zweiten Platte (24) während der Verschiebung der ersten Platte (23) erfolgt.

15. Vorrichtung nach Anspruch 1, ferner mit:
einem Tisch (32) mit einer Oberfläche (32'), auf der ein Patient positioniert ist;
einem Schlitten zum Positionieren und Ausrichten einer Kassette (11), die beim Vorgang des Aufnehmens eines Röntgenbildes verwendet wird, wobei der Schlitten folgendes umfaßt:
die erste Platte (23),
die zweite Platte (24),
die Verbindungseinrichtung (25), und
die Antriebseinrichtung (27, 28);
einem Gehäuse, um den Schlitten und die Kassette (11) aufzunehmen, wobei das Gehäuse an dem Tisch (32) unterhalb der Tischoberfläche (32') verschiebbar angebracht ist; und
einer Einrichtung (33, 37, 38), um das Gehäuse der Detektoreinrichtung entlang der Tischoberfläche in paralleler Richtung zur Position des Patienten zu bewegen.

16. Vorrichtung nach Anspruch 15, ferner mit:
e) einer Trägerbasis (20), wobei die Trägerbasis (20) an die Unterseite der ersten Platte (23) angefügt ist;
f) einer Kurvenbahn (21), die an die Basis (20) angefügt ist, um die Drehung der zweiten Platte (24) zu führen; und
g) Führungsschienen (22a, 22b), die an die Basis (20) und die ersten Platte (23) angefügt sind, um die Verschiebung der ersten Platte (23) zu ermöglichen.

17. Vorrichtung nach Anspruch 16, ferner mit einem Kurvenläufer (26), um die zweite Platte (24) mit der Kurvenbahn (21) zu verbinden.

18. Verfahren zum Positionieren einer Röntgenkassette (11), die beim Vorgang des Aufnehmens eines Röntgenbildes verwendet wird, mit den folgenden Schritten:
a) automatisches Drehen einer Röntgenkassette (11), um ein Röntgenbild aufzunehmen, durch eine Vorrichtung zum Positionieren und Ausrichten der Röntgenkassette (11) mit einer Antriebseinrichtung zum Bewirken der Drehung der Röntgenkassette (11); und
b) gleichzeitiges automatisches Verschieben der Röntgenkassette (11) zu einer erwünschten Position durch die Vorrichtung, wobei die Antriebseinrichtung die Verschiebung der Röntgenkassette (11) bewirkt.

19. Verfahren nach Anspruch 18, ferner mit dem Schritt: automatisches Synchronisieren der Bewegung der Röntgenkassette (11) mit einer Röntgenemissionsvorrichtung (9, 14).

20. Verfahren nach Anspruch 19, wobei der Schritt des Synchronisierens folgenden Schritt aufweist: Verschieben der Röntgenemissionsvorrichtung (9, 14), um die Ausrichtung mit der Röntgenkassette (11) beizubehalten.

21. Verfahren nach Anspruch 18, ferner mit dem folgenden Schritt:
Synchronisieren der Verschiebungsbewegung einer Röntgenemissionsvorrichtung (9, 14) und der Röntgenkassette (11).

22. Verfahren nach Anspruch 21, wobei der Schritt des Syachronisietens ferner folgende Schritte umfaßt; vertikales Bewegen einer Röntgenemissionsvorrichtung (9, 14) und vertikales Bewegen einer Röntgenkassette (11) zu Positionen, wo die Röntgenemissionsvorrichtung (9,14) und die Röntgenkassette (11) ausgerichtet sind.

23. Verfahren nach Anspruch 21, wobei der Schritt des Synchronisierens ferner folgende Schritte umfaßt: horizontales Bewegen einer Röntgenemissionsvorrichtung (9, 14) und horizontales Bewegen einer Röntgenkassette (11) zu Positionen, wo die Röntgenemissionsvorrichtung (9, 14) und die Röntgenkassette (11) ausgerichtet sind.

## Revendications

1. Appareil pour positionner et orienter un réseau de détecteurs numériques (11) qui est utilisé au niveau du processus de prise d'une image rayons X, ledit appareil comprenant:
a) une première plaque (23), ladite première plaque (23) comportant des côtés supérieur et inférieur et ladite première plaque (23) pouvant se déplacer suivant une direction de translation;
b) une seconde plaque (24) qui s'étend au-dessus de ladite première plaque (23), ladite seconde plaque (24) comportant des côtés supérieur et inférieur, ladite seconde plaque (24) pouvant tourner à la fois dans le sens des aiguilles d'une montre et dans le sens inverse des aiguilles d'une montre et étant adaptée pour maintenir le réseau de détecteurs numériques;
c) un moyen de connexion (25) pour lier ladite première plaque (23) à ladite seconde plaque (24), ledit moyen de connexion (25) étant monté de façon tournante sur lesdites première et seconde plaques (23, 24) de telle sorte que ledit moyen de connexion (25) soit entre lesdites première et seconde plaques (23, 24),
**caractérisé par**:
d) un moyen d'entraînement (27, 28) qui est lié audit moyen de connexion (25) pour générer une rotation automatique de ladite seconde plaque (24) et une translation automatique simultanée de ladite première plaque (23) pour générer de façon respective un déplacement en rotation et un déplacement en translation du réseau de détecteurs numériques (11) jusqu'à une position souhaitée.

2. Appareil selon la revendication 1, comprenant en outre:
e) une base de support (20), ladite base (20) étant liée au côté inférieur de ladite première plaque (23);
f) une piste de came (21) qui est liée à ladite base (20) afin de guider une rotation de ladite seconde plaque (24); et
g) des rails de guidage (22a, 22b) qui sont liés à ladite base (20) et à ladite première plaque (23) afin de faciliter une translation de ladite première plaque (23).

3. Appareil selon la revendication 2, comprenant en outre des paliers (23') pour connecter ladite première plaque (23) auxdits rails de guidage (22a, 22b).

4. Appareil selon la revendication 3, dans lequel lesdites première et seconde plaques (23,24) comportent des parties de queue (23", 24').

5. Appareil selon la revendication 4, dans lequel lesdits paliers (23') lient ladite première plaque (23) auxdits rails de guidage (22a, 22b) au niveau de ladite partie de queue (23") de ladite première plaque (23).

6. Appareil selon la revendication 2, comprenant en outre un suiveur de came (26) pour connecter ladite seconde plaque (24) à ladite piste de came (21).

7. Appareil selon la revendication 6, dans lequel ledit suiveur de came (26) est connecté à ladite seconde plaque (24) au niveau d'une partie de queue (24') de ladite seconde plaque (24).

8. Appareil selon la revendication 1, dans lequel ledit moyen d'entraînement (27, 28) comprend un moteur (27) et une courroie (28), ladite courroie (28) étant liée audit moyen de connexion (25).

9. Appareil selon la revendication 8, dans lequel ledit moyen de connexion (25) est un palier (25).

10. Appareil selon la revendication 8, dans lequel ledit moteur (27) est un moteur bidirectionnel (27).

11. Appareil selon la revendication 8, dans lequel ledit moyen d'entraînement (27, 28) inclut au moins deux moteurs, soit un moteur pour permettre le déplacement en rotation de ladite seconde plaque (24) et un moteur pour permettre le déplacement en translation de ladite première plaque (23).

12. Appareil selon la revendication 2, comprenant en outre un réseau imageur rayons X (29) qui est lié à ladite seconde plaque (24), ledit réseau imageur rayons X (29) pouvant capturer une image rayons X.

13. Appareil selon la revendication 1, dans lequel ladite seconde plaque (24), ledit moyen de connexion (25) et ledit moyen d'entraînement (27, 28) sont supportés par ladite première plaque (23) suivant la direction du déplacement de ladite première plaque (23) pendant le déplacement en translation de ladite première plaque (23).

14. Appareil selon la revendication 13, dans lequel ladite rotation de ladite seconde plaque (24) se produit pendant la translation de ladite première plaque (23).

15. Appareil selon la revendication 1, comprenant en outre:
une table (32) qui comporte une surface (32') sur laquelle un patient est positionné;
un chariot pour positionner et orienter une cassette (11) qui est utilisée lors du processus de prise d'une image rayons X, ledit chariot comprenant:
ladite première plaque (23);
ladite seconde plaque (24);
ledit moyen de connexion (25);
ledit moyen d'entraînement (27, 28);
un boîtier pour contenir le chariot et la cassette (11),
ledit boîtier étant monté de façon coulissante sur ladite table (32) au-dessous de ladite surface de table (32'); et
un moyen (33, 37, 38) pour déplacer ledit boîtier de réseau de détecteurs le long de ladite surface de table suivant une direction qui est parallèle à la position dudit patient.

16. Appareil selon la revendication 15, comprenant en outre:
e) une base de support (20), ladite base (20) étant liée au côté inférieur de ladite première plaque (23);
f) une piste de came (21) qui est liée à ladite base (20) afin de guider une rotation de ladite seconde plaque (24); et
g) des rails de guidage (22a, 22b) qui sont liés à ladite base (20) et à ladite première plaque (23) de manière à permettre une translation de ladite première plaque (23).

17. Appareil selon la revendication 16, comprenant en outre un suiveur de came (26) pour connecter ladite seconde plaque (24) à ladite piste de came (21).

18. Procédé pour positionner une cassette rayons X (11) qui est utilisée au niveau du processus de prise d'une image rayons X, **caractérisé en ce qu'**il comprend les étapes de:
a) rotation automatique d'une cassette rayons X (11) pour prendre une image rayons X par l'intermédiaire d'un appareil pour positionner et orienter ladite cassette rayons X (11) incluant un moyen d'entraînement pour générer la rotation de ladite cassette rayons X (11); et
b) translation automatique simultanée de la cassette rayons X (11) jusqu'à une position souhaitée par l'intermédiaire dudit appareil où ledit moyen d'entraînement provoque la translation de ladite cassette rayons (11).

19. Procédé selon la revendication 18, comprenant en outre l'étape de synchronisation automatique du déplacement de la cassette rayons X (11) avec un appareil d'émission de rayons X (9, 14).

20. Procédé selon la revendication 19, dans lequel ladite étape de synchronisation inclut l'étape de translation de l'appareil d'émission de rayons X (9, 14) afin de maintenir un alignement avec la cassette rayons X (11).

21. Procédé selon la revendication 18, comprenant en outre l'étape de:
synchronisation du déplacement en translation d'un appareil d'émission de rayons X (9, 14) et de ladite cassette rayons X (11).

22. Procédé selon la revendication 21, dans lequel ladite étape de synchronisation comprend en outre les étapes de déplacement vertical d'un appareil d'émission de rayons X (9, 14) et de déplacement vertical d'une cassette rayons X (11) jusqu'à des positions au niveau desquelles l'appareil d'émission de rayons X (9, 14) et la cassette rayons X sont alignés.

23. Procédé selon la revendication 21, dans lequel ladite étape de synchronisation comprend en outre les étapes de déplacement horizontal d'un appareil d'émission de rayons X (9, 14) et de déplacement horizontal d'une cassette rayons X (11) jusqu'à des positions au niveau desquelles l'appareil d'émission de rayons X (9, 14) et la cassette rayons X (11) sont alignés.
